# EUROPÄISCHE PATENTSCHRIFT

(11) **EP 0 594 976 B1**
(45) Veröffentlichungstag und Bekanntmachung des Hinweises auf die Patenterteilung: **18.09.1996**
(21) Anmeldenummer: 93113832.5
(22) Anmeldetag: 30.08.1993
(51) Int. Cl.: H02B 11/28, H02B 13/02

(54) **Schaltfeld für Mittelspannung**
Medium voltage switchgear
Installation de commutation moyenne tension

(30) Priorität: 03.09.1992 DE 4229421; 13.07.1993 DE 4323369
(43) Veröffentlichungstag der Anmeldung: 04.05.1994
(73) Patentinhaber: ABB PATENT GmbH, D-68309 Mannheim (DE)
(72) Erfinder: Forstbach, Matthias, D-64625 Bensheim (DE); Essinger, Karl-Heinz, D-64686 Lautertal (DE)
(74) Vertreter: Rupprecht, Klaus, Dipl.-Ing.

(56) Entgegenhaltungen:
- EP-A- 0 171 352
- EP-A- 0 311 472
- DE-A- 3 033 633
- DE-C- 666 199
- FR-A- 2 242 794
- FR-A- 2 348 592

## Beschreibung

Die Erfindung betrifft ein metallgekapseltes Mittelspannungsschaltfeld mit einem Last- sowie mindestens einem Erdungsschalter gemäß Oberbegriff des Anspruches 1.

Ein Schaltfeld dieser Art ist aus EP-A-0 311 472 bekannt.

Bei dem vorgenannten Schaltfeld wird insbesondere durch die in Feldtiefe hintereinander liegenden Phasen eine geringe Feldbreite erzielt.

Diese Feldbreite, so die Aufgabe der Erfindung, soll noch weiter verringert werden, ohne auf einen obligatorischen und leistungsfähigen Erdungsschalter verzichten zu müssen; ferner ist es ein Ziel der Erfindung, die Konstruktion durch vereinfachte Erstellung von Schaltfeldaktivteilen noch weiter zu verbessern.

Diese Aufgabe wird erfindungsgemäß durch die kennzeichnenden Merkmale des Anspruches 1 gelöst.

Allgemein also wird diese Aufgabe gelöst durch einen zwischen Kabel sowie Lasttrennschalter angeordneten Abgangsanschluß, der als Form-, insbesondere als Gußteil, ausgeführt ist und in dessen Innerem Fixkontakte zur Kontaktierung mit den beweglichen Schaltarmen der Erdungsschalter angeordnet sind.

Der Abgangsanschluß ist somit ein Universalaktivteil, das nicht nur die statischen Anschlüsse, z. B. durch Schraubverbindungen, zwischen dem Lastschalter und Kabel bzw. einer dazwischen gelegten HH-Sicherung herstellt, sondern auch die auf Hochspannungspotential gelegenen Gegenkontakte für den Erdungsschalter beherbergt. Dabei können ins Innere des Abgangsanschlusses führende Wandungsteile in Form von Schlitzen oder anderen Einsenkungen selbst die Fixkontaktstellen bilden, d. h. besondere Kontakteinbauten sind entbehrlich.

Die Abgangsanschlüsse sind spannungsgünstig verwirklichbar, da sie keine äußeren feldverzerrenden Kontaktaufbauten tragen müssen. Daher ist mit ihnen eine optimal günstige Feldbreite erzielbar. Hinzu kommt, daß durch deren Herstellung, z. B. als Kokillengußteil, Nachbearbeitungen weitestgehend entbehrlich sind. Zusätzlich kann bei Bedarf der jeweilige Abgangsanschluß noch eine Abstützfläche für einen Isolierstützer aufweisen; es ist zweckmäßig diese Isolatoren mit kapazitiven Teilerelementen für eine Spannungsanzeige auszurüsten.

Werden HH-Sicherungen zwischen dem Kabel sowie dem Lastschalter eingesetzt, ergibt sich nebem dem lastschalterseitigen ein weiterer kabelendverschlußseitiger Abgangsanschluß. Dadurch erweitert sich die Funktionalität eines Abgangsanschlusses, er besitzt nunmehr zusätzlich noch eine Aufnahme für die HH-Sicherungen. So hat z. B. der kabelendverschlußseitige Abgangsanschluß eine solche Aufnahme, die mit entsprechenden Federkontakten bestückt ist, desweiteren eine Anschlußfahne zum Kontaktieren mit dem Kabelendverschluß, einen oder mehrere Schlitze für die Aufnahme eines Messerkontaktes des Erdungsschalters und schließlich eine, vornehmlich zur Fallinie des Schaltfeldes unter einem Winkel verlaufende Abstützfläche für einen Isolierstützer.

Der lastschalterseitige Abgangsanschluß kann bei Verwendung von Sicherungen in jedem Falle hinsichtlich seiner Außenkontur zylinderförmig ausgebildet sein; er enthält eine entsprechende Sicherungsaufnahme, parallel laufende Schlitze für ein Kontaktmesserpaar des Erdungsschalters sowie Anschraubstellen zum verdrehsicheren Kontaktieren mit dem Lasttrennschalter.

Um eine günstige Feldbreite realisieren zu können, ist es ferner wesentlich, daß der Erdungsschalter so untergebracht ist, daß die Spannungsfestigkeit des Schaltfeldes ein Optimum darstellt. Dafür sieht die Erfindung folgende Maßnahmen vor:

Die Antriebswelle des Erdungsschalters ist durch eine seitlich heruntergezogene Isolierschürze des Lasttrennschaltergehäuses gegenüber Spannung führenden Teilen weitestgehend abgeschirmt, und die Schaltarme des Erders liegen in dessen Ausschaltstellung längs zur Schaltfeldaußenwand und sind dieser so weit wie möglich angenähert. Bei der Erdung des lastschalternahen Erders müssen dessen Schaltmesser die Isolierschürze untergreifen. Dazu sind die Schaltarme (Erdungsmesser) des Erders starr mit einem rechtwinklig abgehenden Verbindungsarm gekoppelt, der fest auf der Erderantriebswelle aufsitzt. Dadurch entsteht ein Winkelarm, das insbesondere den Einsatz verkürzter Schaltarme erlaubt.

Bei Vorhandensein eines Kabelerders, kann dieser mit der lastschalternahen einzigen Erderantriebswelle gekoppelt werden, und zwar über eine Koppel, die mit der Antriebswelle mittels eines Lenkers verbunden ist. Ein weiterer Lenker ist mit einer hart an der Schaltfeldaußenwand gelagerten und ein Erdungsmesser tragenden Betätigungswelle des Kabelerders verbunden und treibt diese an. Auch das Erdungsmesser des Kabelerders liegt zweckmäßigerweise in seiner Ausschaltstellung längs zur Schaltfeldaußenseite und in deren unmittelbarer Nähe.

Diese und weitere vorteilhafte Ausgestaltungen und Weiterbildungen der Erfindung sind den Unteransprüchen zu entnehmen.

Anhand der Zeichnung, in der einige Ausführungsbeispiele der Erfindung dargestellt sind, sollen die Erfindung, weitere vorteilhafte Ausgestaltungen und Verbesserungen sowie weitere Vorteile näher erläutert und beschrieben werden.

Es zeigen:
- Figur 1: eine Vorderansicht eines Schaltfeldes (ohne Frontwand),
- Figur 2: eine Seitenansicht des Schaltfeldes nach Figur 1 (ohne Seitenaußenwand),
- Figur 3: eine Vorderansicht eines Schaltfeldes mit HH-Sicherungen,
- Figur 4: eine Schnittansicht gemäß Schnittlinie IV-IV eines ersten Abgangsabschlußelementes,
- Figur 5: eine Ansicht gemäß Pfeilrichtung V der Figur 4,
- Figur 6: eine Schnittansicht gemäß Schnittlinie VI-VI der Figur 4,
- Figuren 7, 8 und 9: unterschiedliche Ansichten des zweiten Abgangsabschlußelementes und
- Figuren 10 bis 12: unterschiedliche Ansichten des dritten Abgangsabschlußelementes.

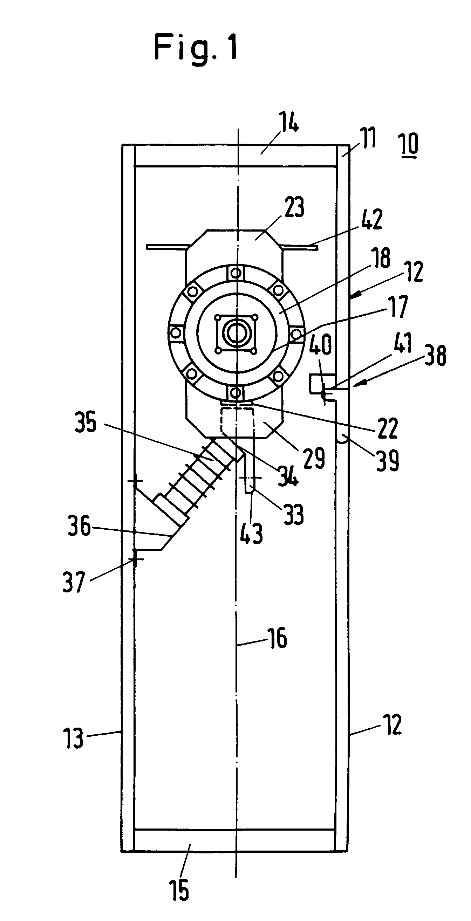

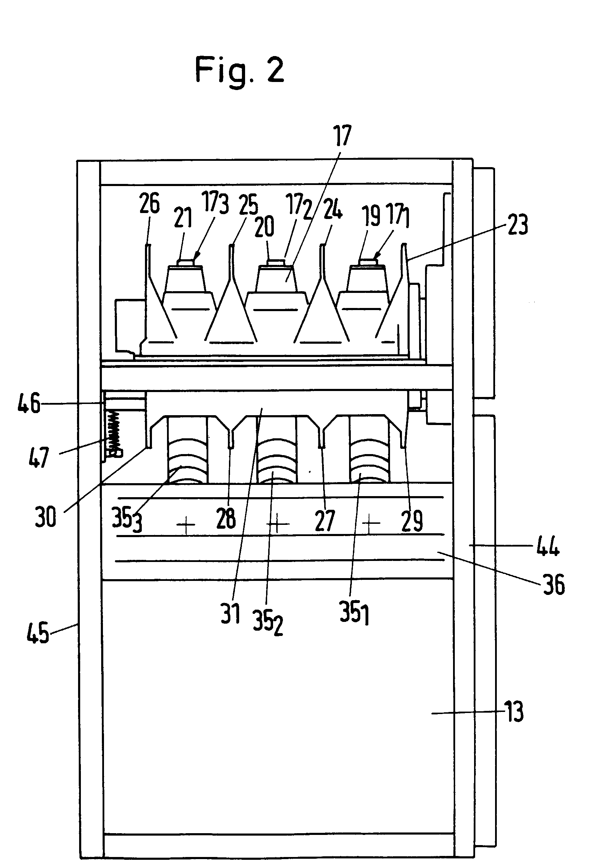

Es sei nun Bezug genommen auf die Figuren 1 und 2.

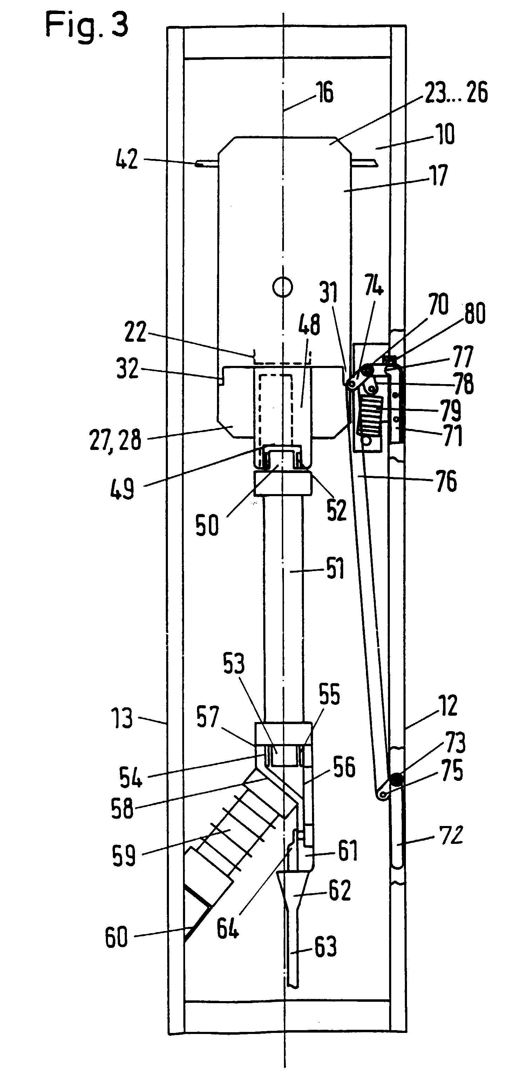

Ein Schaltfeld 10 besitzt ein Schaltfeldgehäuse 11, welches aus metallischen Kapselungswänden 12, 13, 14 und 15 gebildet ist. Die Frontwand ist nicht dargestellt. Die Kapselungswände 12 und 13 sind Seitenwände und die Kapselungswände 14 und 15 die untere und obere Abschlußwandung. In der Mittelebene 16 ist ein Lasttrennschalter 17 eingebaut, dessen Gehäuse 18 hermetisch und gasdicht abgeschlossen und mit SF6-Gas zur Lichtbogenlöschung bzw. Isolierung gefüllt ist. Der Lasttrennschalter 17 ist hierbei ein dreipoliger Schalter, dessen Pole mit den Bezugsziffern 171, 172 und 173 bezeichnet sind. Die einzelnen Pole 171, 172 und 173 besitzen an der oberen Seite des Lasttrennschalters 17 obere Anschlußstücke 19, 20 und 21, denen in Figur 1 gestrichelt dargestellte untere Anschlußstücke entsprechen, die in der Figur 1 mit 22 bezeichnet sind. Zwischen den Polen befinden sich obere Trennwände 23, 24, 25 und 26, die die oberen Anschlußstücke 19, 20 und 21 gegeneinander und gegen das Schaltfeldgehäuse 11 abschirmen; zwischen den unteren Anschlußstücken 22 befinden sich untere Trennwände 27 und 28, denen Trennwände 29 und 30 entsprechen, mit denen die unteren Anschlußstücke 22 gegenüber dem Schaltfeldgehäuse abgeschirmt sind. Zwischen den Trennwänden 30, 28, 27 und 29 befinden sich heruntergezogene Isolierschützen, die in Figur 3 mit den Bezugsziffern 31 und 32 bezeichnet sind.

An den unteren Anschlußstücken 22 sind Abgangsabschlußelemente 33 für jeden Pol angebracht, die weiter unten näher beschrieben werden. Jedes Abgangsabschlußelement 33 besitzt eine unter ca. 45° verlaufende Stützebene 34, gegen die ein Ende eines Stützisolators 35 anliegt; das andere Ende des Stützisolators 35 ist an einer Konsole 36 befestigt; der Stützisolator für jedes Abgangsabschlußelement ist unter einem Winkel von ca. 45° zur Mittelebene 16 ausgerichtet. Die Konsole 36 ist mittels Schraubenverbindungen 37 an der Seitenwand 13 befestigt.

An der Seitenwand 12 befindet sich jedem Pol zugeordnet ein Erdungsschalter 38, dessen Schaltermesser 39, das L-förmig ausgebildet ist, mit einer geeigneten Kontaktstelle am Abgangsabschlußelement 33 kontaktiert werden kann. Das Schaltermesser 39 dreht sich dabei um eine Achse 40, wobei der kürzere Schenkel 41 so bemessen ist, daß er die Isolierschürze 31 untergreifen kann. Zwar ist der Erdungsschalter der Figur 3 anders ausgebildet als der der Figur 1, was weiter unten näher erläutert werden soll; gleichwohl ist die Isolierschürze 31 bzw. 32 die gleiche wie in Figur 1.

Der Lasttrennschalter 17 ist an einer Tragplatte 42 im Gehäuse befestigt.

An dem Abgangsabschlußelement ist ein Anschlußfortsatz 43 angeformt, an dem ein nicht näher dargestellter Kabelabgang angeschlossen werden kann. Die Anschlußstücke 19, 20 und 21 dienen zur Kontaktierung mit einer oder mehreren nicht näher dargestellten Sammelschienen. Die Figur 2 zeigt die Frontwand 44 und die Rückwand 45. Zur Betätigung des Erdungsschalters 39 ist eine Antriebswelle 46 (siehe Figur 2) des Erdungsschalters 39 vorgesehen, die zwischen der Frontwand 44 und der Rückwand 45 verläuft und von der Isolierschürze gegenüber den unteren Anschlußstücken 22 und gegenüber den Abgangsabschlußelementen 33 abgeschirmt ist. In der Ausschaltstellung liegen die Schaltermesser 39 des Erdungsschalters an der Seitenwand 12 an; in der Figur 2 ist noch angedeutet eine Ausschaltfeder 47. Man erkennt in der Figur 2 auch die Stützisolatoren 351, 3521 und 353, die den unteren Anschlußstücken 22 zugeordnet sind.

Es sei nun Bezug genommen auf die Figur 3.

An dem strichliert dargestellten unteren Anschlußstück 22 jedes Pols schließt ein zweites Anschlußelement 48 an, welches in gleicher Weise wie das Abgangsabschlußelement 33 Mittel zur Kontaktierung mit einem Erdungsschalter aufweist. Im wesentlichen ist das zweite Abgangsabschlußelement 48 zylinderförmig ausgebildet und besitzt in seinem unteren Bereich eine Ausnehmung 49, in die ein Anschlußkopf 50 einer Hochspannungshochleistungssicherung 51 (kurz HH-Sicherung genannt) eingesetzt ist. Zur Kontaktierung des Kopfes 50 mit dem zweiten Abgangsabschlußelement 48 ist in der Ausnehmung 49 eine Kontaktfeder 52 (siehe weiter unten) eingesetzt. Das untere Ende der HH-Sicherung 51 mit dem Kopf 53 ist in eine Ausnehmung 54 eines dritten Abgangsabschlußelementes 56 eingesetzt, in welcher Ausnehmung 54 eine Kontaktfeder 55 eingesetzt ist, die der Kontaktfeder 52 entspricht. Im oberen Bereich 57 ist das dritte Abgangsabschlußelement 56 etwa zylindrisch; daran schließt sich eine schräg verlaufende Ebene 58 an, deren Winkel zur Mittelebene 16 dem Winkel der Anschluß- oder Abstützebene 34 entspricht, mit der ein Stützisolator 59 fest verbunden ist, der an einer Konsole 60 an der Seitenwand 13 befestigt ist. An dem oberen Bereich 57 schließt ein Flachbereich 61 an, an dem der Kabelendverschluß 62 eines Abgangskabels 63 mit einer Anschlußlasche 64 angeschlossen ist.

In die Stützisolatoren 35 und 59 sind nicht näher gezeigte Meßkondensatoren eingegossen, an deren herausgeführten Anschlüssen ein Spannungstester anschließbar ist (nicht dargestellt).

Das Schaltfeld gemäß Figur 3 besitzt eine Erdungsschalteranordnung, die sich von der der Figur 1 unterscheidet. Die Erdungsschaltungsanordnung besitzt ein erstes und ein zweites Kontaktmesserpaar 71, 72, von denen das zweite Kontaktmesserpaar 72 an einer Betätigungswelle 73 angebracht ist. Der Abstand der beiden Kontaktmesserpaare 71, 72 entspricht der Länge der HH-Sicherung. An der Antriebswelle 70 befindet sich eine erste Betätigungskurbel 74 und an der Betätigungswelle 73 eine zweite Kurbel 75, die mittels einer Koppelstange 76 gelenkig verbunden sind. Zwischen dem Kontaktmesserpaar 71 und der Antriebswelle 70 befindet sich ein Verbindungsarm 77, so daß schlußendlich das erste Kontaktmesserpaar 71 bezogen auf die Antriebswelle 70 eine L-Form aufweist. Mit der Antriebswelle 70 ist weiterhin eine Antriebslasche 78 fest verbunden, an der eine Antriebsfeder 79 anschließt, die die Antriebsbewegung in Richtung Ein- bzw. Ausschalten unterstützt, was hier nicht näher dargestellt werden soll. Die einzelnen ersten Kontaktmesserpaare 71 sind mittels einer mit den Kontaktmesserpaaren 71 mitschwenkbaren Verbindungsbrücke 80 elektrisch leitend verbunden, welche Brücke 80 geerdet ist.

Da, wie bei Figur 1 dargestellt, die Antriebswelle 70 der Erdungsschaltvorrichtung oberhalb der Unterkante der Isolierschürze 31 verläuft, muß jedes Kontaktmesserpaar 71 diese Schürze 31 untergreifen. Demgemäß ist der Verbindungsarm 77 zu bemessen.

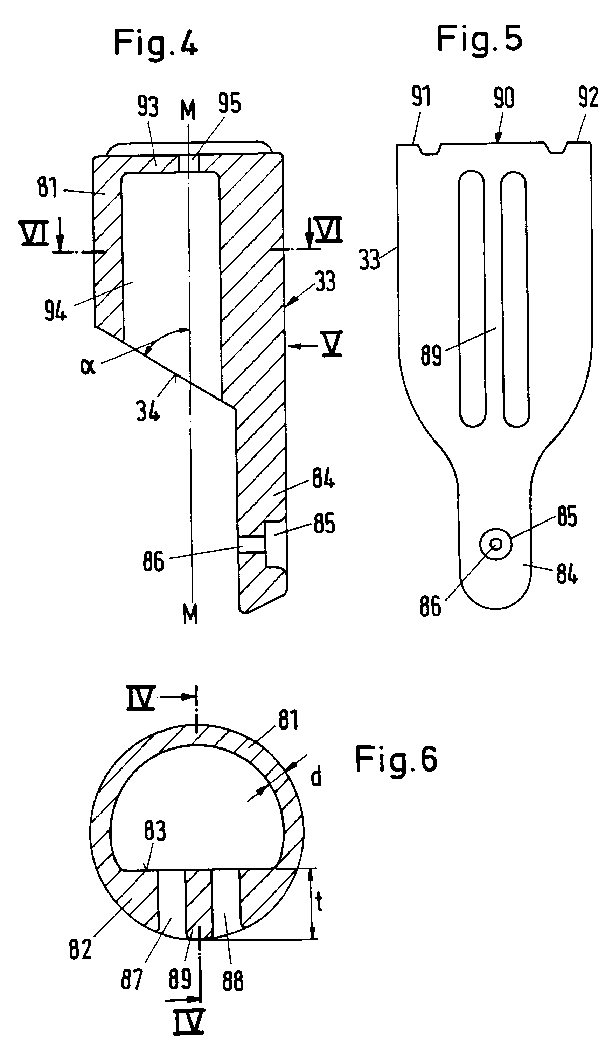

Die Figuren 4 bis 6 zeigen das erste Abgangsabschlußelement 33. Dieses Abgangsabschlußelement besitzt einen zylindrischen Abschnitt 81, an dessen einer Mantellinie ein kreissegmentartiger Querschnitt 82 angeformt ist, so daß sich im Inneren eine ebene Fläche 83 bildet, wodurch sich die Dicke d auf eine Wandstärke T erweitert. Im Bereich dieser Mantellinie besitzt der zylindrische Abschnitt 81 eine flach ausgebildete, axial verlaufende Verlängerung 84, die im Bereich des Endes eine Vertiefung 85 mit einer konzentrischen Bohrung 86 aufweist. Im Bereich des kreissegmentförmigen Abschnittes sind zwei parallel zueinander und axial verlaufende Schlitze 87 und 88 vorgesehen, die einen axial verlaufenden Steg 89 zwischen sich bilden, welcher Steg 89 einen Fixkontakt für das Kontaktmesserpaar 39 bildet. Etwa in der Mitte ist der zylindrische Bereich 81 schräg abgeschnitten, wodurch eine unter einem Winkel α gegenüber der Mittellinie M-M verlaufende schräge Stützebene 34 gebildet ist. Die dem unteren Anschlußstück 22 zugewandte, der flachen Verlängerung 84 entgegengesetzt liegende Stirnfläche 90 des Abschlußelementes 33 besitzt an den distalen Mantellinien Vorsprünge 91 und 92, die mit entsprechenden Vertiefungen an dem unteren Anschlußstück 22 korrespondieren, wodurch eine Verdrehsicherheit erreicht wird. Der zylinderförmige Abschnitt ist im Bereich der Stirnfläche 90 mit einem Boden 23 versehen, wodurch sich im Querschnitt etwa eine hufeisenförmige, durch den Boden 93 verschlossene Höhlung 94 bildet. Über eine im Boden 93 vorgesehenen Bohrung 95 kann das Element 33 an dem unteren Anschlußstück mittels einer Schraubenverbindung befestigt werden. An der flachen Verlängerung kann beispielsweise eine Lasche 64 eines Kabels 63 befestigt werden.

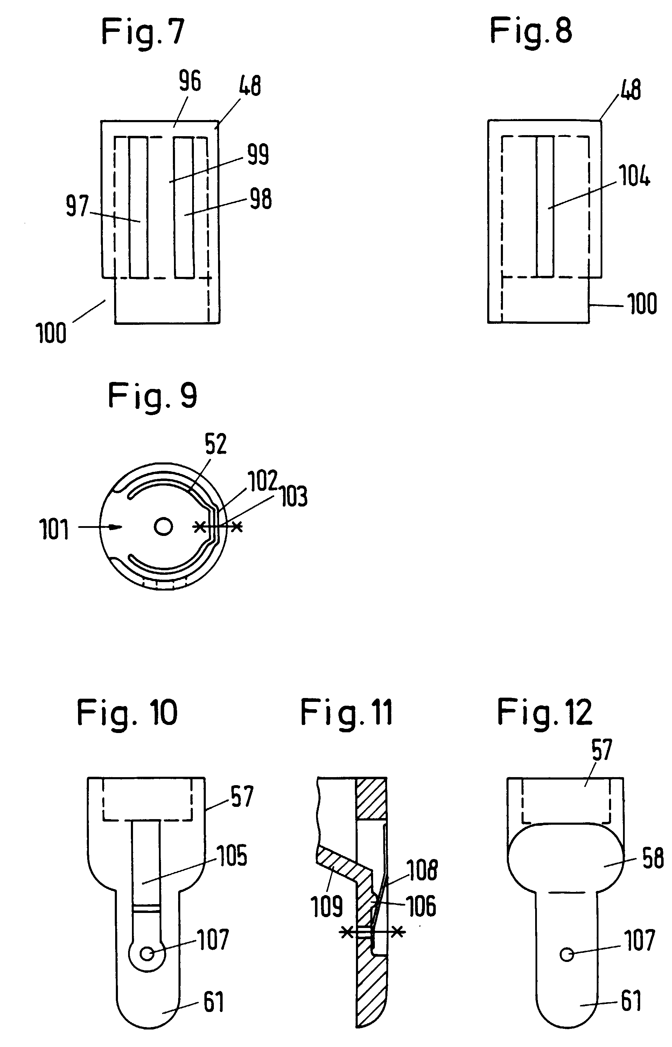

Basierend auf dem in den Figuren 4 bis 6 gezeigten Abgangsabschlußelement 33 sind in entsprechender Weise die Abschlußelemente 48 bzw. 56 ähnlich aufgebaut. Die Figur 7 zeigt das zweite Anschlußstück 48, welches einen kreiszylinderförmigen Querschnitt aufweist, der mit einem Boden 96 verschlossen ist. An der Seitenwand befinden sich den Schlitzen 87 und 88 entsprechende Schlitze 97 und 98, die zwischen sich einen Steg 99 bilden, der dem Steg 89 entspricht. Das dem Boden 96 entgegengesetzte Ende besitzt einen einen segmentartigen Ausschnitt 99, durch den im Zylinder eine Zugangsöffnung 100 ins Innere des zweiten Abgangsabschlußelementes gebildet ist. Die Innenfläche besitzt an dem der Öffnung 101 entgegengesetzten Wandbereich eine axial verlaufende Vertiefung 102, in der die Kontaktfeder 52 mittels einer Schraubverbindung 103 befestigt ist. An der den Schlitzen 97 und 98 entgegengesetzt liegenden Seite ist ein weiterer Schlitz 104 vorgesehen, in den ein Auslöseelement eingreifen kann.

Das dritte Abgangsabschlußelement 56 ist in den Figuren 10 bis 12 dargestellt. Es besitzt einen kreisförmigen Abschnitt 57, der dem Bereich des Elementes 48 mit der Feder 52 entspricht; an diesen kreisförmigen Abschnitt 57 schließt sich ein flacher Abschnitt oder ein Flachbereich 61 an, in dem sich eine axial verlaufende, nach außen offene Vertiefung 105 befindet. Am Boden der Vertiefung im Bereich des unteren Endes befindet sich eine quer verlaufende, vorspringende Leiste 106. Am unteren Ende der Vertiefung 105 befindet sich eine Bohrung 107, über die sowohl die Lasche 64 des Kabels 63 als auch eine Blattfeder 108 in der Vertiefung befestigt werden kann; die Figur 11 zeigt die Blattfeder 108. Die Leiste 106 verbiegt die Blattfeder 108, so daß die Blattfeder 108 einen schrägen Winkel zum Boden der Vertiefung 105 einnimmt und dadurch als Gegenkontakt für das Kontaktmesser 72 dient. Die schräge Stützebene 58 ist dabei, wie aus Figur 11 ersichtlich, durch eine schräg verlaufende Wandung 109 gebildet.

Die Abgangsanschlußelemente sind in der obigen Beschreibung lediglich schematisch dargestellt; es sind Abwandlungen denkbar, die im Rahmen der Erfindung liegen.

## Patentansprüche

1. Metallgekapseltes Mittelspannungsschaltfeld mit einem Lasttrennschalter (18), bei dem alle Schaltstellen von einem Schaltergehäuse (11) umschlossen sind und dessen Phasen - von der Frontseite des Schaltfeldes aus gesehen - hintereinander liegen, mit Anschlußstücken (19, 20, 21) des Lasttrennschalters (18) zum Kontaktieren mit Sammelschienen einerseits und mindestens einem, zwischen Kabel (63) sowie Lasttrennschalter (18) angeordneten Abgangsanschluß andererseits sowie mit einem Erdungsschalter (38) zum Erden und Kurzschließen der Abgangsanschlüsse, dessen Antriebswelle längs zum Lastschalter verläuft, dadurch gekennzeichnet, daß der Abgangsanschluß (33) als Formteil, insbesondere Gußteil, ausgebildet ist, in dessen Innerem mindestens ein Fixkontakt (89) für einen beweglichen Schaltarm des Erdungsschalters (39) eingearbeitet ist.

2. Schaltfeld nach Anspruch 1, dadurch gekennzeichnet, daß ins Innere der Abgangsanschlüsse (33) führende Wandungsflächen die unmittelbaren Fixkontaktflächen für die Schaltarme des Erdungsschalters (39) bilden.

3. Schaltfeld nach Anspruch 1 oder 2, dadurch gekennzeichnet, daß der Abgangsanschluß (33) eine Anschlußfahne (43; 84) zum Kontaktieren mit einem Kabelendverschluß (62) sowie eine Abstützfläche (34) für einen Isolierstützer (35) enthält.

4. Schaltfeld nach einem der Ansprüche 1 bis 3, dadurch gekennzeichnet, daß die Abstützfläche (34) am Abgangsanschluß schräg zur Schaltfeldlängsachse (16) geführt ist.

5. Metallgekapseltes Mittelspannungsschaltfeld nach Anspruch 1 oder 2, mit zwischen Kabelendverschluß (62) sowie Lasttrennschalter (18) angeordneten Hochleistungssicherungen (51) mit einem lastschalterseitigen sowie einem kabelendverschlußseitigen Abgangsanschluß (48, 56), dadurch gekennzeichnet, daß lediglich der kabelendverschlußseitige Abgangsanschluß (56) eine Abstützfläche (58) für einen Isolierstützer (59) aufweist, der lastschalterseitige Abgangsanschluß (48) unmittelbar am Lastschaltergehäuse (18) verdrehsicher befestigt ist und beide Abgangsanschlüsse (48, 56) sich gegenüberliegende Aufnahmen (49, 54) zum Kontaktieren mit den Hochleistungssicherungen (51) aufweisen.

6. Schaltfeld nach Anspruch 5, dadurch gekennzeichnet, daß in dem mit zylindrischer Außenkontur ausgebildeten lastschalterseitigen Abgangsanschluß (48) ins Innere führende, parallel zueinander liegende Schlitze (97, 98) zur Aufnahme eines Kontaktmesserpaares (71) des Erdungsschalters eingearbeitet sind.

7. Schaltfeld nach Anspruch 5 oder 6, dadurch gekennzeichnet, daß die Antriebswelle (40, 70) des Erdungsschalters von einer seitlich heruntergezogenen Isolierschürze (31, 32) des Lasttrennschaltergehäuses (18) abgeschirmt ist, die von den Kontaktmessern, des Erdungsschalters (39) beim Erdungsvorgang untergriffen wird, wobei die Kontaktmesser über eine nahezu senkrecht zu deren Längserstreckung verlaufenden Verbindungsarm (41) der kraftschlüssig auf der Antriebswelle (40) aufsitzt, gekoppelt sind und die Kontaktmesser in ihrer Ausschaltstellung nahe und längs zur Schaltfeldaußenwand (12) gestellt sind.

8. Schaltfeld nach Anspruch 7, dadurch gekennzeichnet, daß dem kabelendverschlußseitigen Abgangsanschluß (56) ein Kabelerder (72, 73) mit einem Erdungsmesser (72) zugeordnet ist, das ebenfalls in der Ausschaltstellung parallel zur Seitenschaltfeldaußenwand (12) gestellt ist und dort auf einer Betätigungswelle (73) aufsitzt, die mit der Antriebswelle (70) über eine Koppel (76) sowie daran beidseitig angelenkten Kurbeln (74, 75) verbunden ist.

9. Schaltfeld nach einem der Ansprüche 1 bis 8, dadurch gekennzeichnet, daß die Abgangsanschlüsse (33, 48, 56) aus einer Aluminiumlegierung gegossen sind.

## Claims

1. Metal-encapsulated medium voltage switch panel having a load disconnector (18), in which all the switching points are enclosed by a switch housing (11) and whose phases - seen from the front of the switch panel - lie one behind the other, having connecting pieces (19, 20, 21) of the load disconnector (18) for making contact with busbars on the one hand and with at least one outgoer connection, which is arranged between the cable (63) and the load disconnector (18), on the other hand, and having an earthing switch (38) for earthing and short-circuiting the outgoer connections, the driveshaft of which earthing switch runs longitudinally with respect to the load disconnector, characterized in that the outgoer connection (33) is designed as a moulding, in particular a casting, in whose interior at least one fixed contact (89) is incorporated for a moving switching arm of the earthing switch (39).

2. Switch panel according to Claim 1, characterized in that wall surfaces which lead into the interior of the outgoer connections (33) form the immediate fixed contact surfaces for the switching arms of the earthing switch (39).

3. Switch panel according to Claim 1 or 2, characterized in that the outgoer connection (33) contains a connecting tab (43; 84) for making contact with a cable termination (62), as well as a supporting surface (34) for an insulated pin (35).

4. Switch panel according to one of Claims 1 to 3, characterized in that the supporting surface (34) is guided on the outgoer connection obliquely with respect to the switch panel longitudinal axis (16).

5. Metal-encapsulated medium voltage switch panel according to Claim 1 or 2, having high-capacity fuses (51) which are arranged between the cable termination (62) and the load disconnector (18) and have an outgoer connection (48) on the load disconnector side and an outgoer connection (56) on the cable termination side, characterized in that only the outgoer connection (56) on the cable termination side has a supporting surface (58) for an insulated pin (59), the outgoer connection (48) on the load disconnector side is mounted directly on the load disconnector housing (18) such that it cannot twist, and both outgoer connections (48, 56) have mutually opposite receptacles (49, 54) for making contact with the high-capacity fuses (51).

6. Switch panel according to Claim 5, characterized in that slots (97, 98), which lead into the interior and are parallel to one another, are incorporated in the outgoer connection (48) which is on the load disconnector side and is designed with a cylindrical external contour, for accommodating a pair of contact blades (71) of the earthing switch.

7. Switch panel according to Claim 5 or 6, characterized in that the driveshaft (40, 70) of the earthing switch is screened by an insulating skirt (31, 32) of the load disconnector housing (18), which insulating skirt (31, 32) is drawn down at the sides and under which the contact blades of the earthing switch (39) engage during the earthing process, the contact blades being coupled via a connecting arm (41) which runs virtually at right angles to the longitudinal extent of said contact blades and is seated in a force-fitting manner on the driveshaft (40), and, in their disconnected position, the contact blades being positioned close to and longitudinally with respect to the switch panel outer wall (12).

8. Switch panel according to Claim 7, characterized in that a cable earther (72, 73) having an earthing blade (72) is assigned to the outgoer connection (56) on the cable termination side, which cable earth (72, 73) is likewise positioned parallel to the side switch panel outer wall (12) in the disconnected position and is seated there on an operating shaft (73) which is connected to the driveshaft (70) via a connecting rod (76) and cranks (74, 75) which are articulated thereon on both sides.

9. Switch panel according to one of Claims 1 to 8, characterized in that the outgoer connections (33, 48, 56) are cast from an aluminium alloy.

## Revendications

1. Tableau de couplage pour moyenne tension à blindage métallique, avec un interrupteur de coupure en charge (18) dans lequel tous les contacts d'interrupteur sont entourés d'un boîtier (11) d'interrupteur et dont les phases - vu à partir de la face avant du tableau de couplage - sont disposées l'une derrière l'autre, avec d'une part des pièces de connexion (19, 20, 21) de l'interrupteur de coupure en charge (18) pour réaliser la liaison électrique avec des barres omnibus et d'autre part au moins un interrupteur de mise à la terre (38) pour mettre à la terre et court-circuiter les bornes de branchement, dont l'arbre d'entraînement s'étend dans la direction longitudinale par rapport à l'interrupteur de coupure en charge, caractérisé par le fait que l'élément de borne de branchement (33) est agencé sous forme de pièce préformée, notamment de pièce moulée, à l'intérieur de laquelle est aménagé au moins un contact fixe (89) pour un bras mobile de l'interrupteur de mise à la terre (39).

2. Tableau de couplage selon la revendication 1, caractérisé par le fait que des surfaces de paroi qui mènent à l'intérieur des éléments de borne de branchement (33) constituent les surfaces de conatct fixe directes pour les bras de contact de l'interrupteur de mise à la terre (39).

3. Tableau de couplage selon la revendication 1 ou 2, caractérisé par le fait que l'élément de borne de branchement (33) comporte une patte de connexion (43; 84) pour assurer la liaison électrique avec une cosse d'extrémité (62) de câble ainsi qu'une surface d'appui (34) pour un isolateur-support (35).

4. Tableau de couplage selon l'une des revendications 1 à 3, caractérisé par le fait que la surface d'appui (34) sur l'élément de borne de branchement est inclinée par rapport à l'axe longitudinal (16) du tableau de couplage.

5. Tableau de couplage pour moyenne tension à blindage métallique selon la revendication 1 ou 2 avec des fusibles à haut pouvoir de coupure (51) disposés entre la cosse (62) d'extrémité de câble et l'interrupteur de coupure en charge (18) et avec un élément de borne de branchement côté interrupteur de coupure en charge et un élément de borne de branchement côté extrémité de câble (48, 56), caractérisé par le fait que seule l'élément de borne de branchement (56) côté extrémité de câble comporte une surface d'appui (58) pour un isolateur-support (59), que l'élément de borne de branchement (48) côté interrupteur de coupure en charge est fixé directement, sans possibilité de rotation sur le boîtier (18) d'interrupteur de coupure en charge et que les deux éléments de bornes de branchement (48, 56) présentent des moyens de récpetion (49, 54) disposés mutuellement en vis-à-vis pour assurer la liaison électrique avec les fusibles à haut pouvoir de coupure (51).

6. Tableau de couplage selon la revendication 5, caractérisé par le fait que des fentes (97, 98) parallèles, menant vers l'intérieur, destinées à recevoir une paire de couteaux de contact (71) de l'interrupteur de mise à la terre sont usinées dans l'élément de borne de branchement (48) de forme extérieure cylindrique, côté interrupteur de coupure en charge.

7. Tableau de couplage selon la revendication 5 ou 6, caractérisé par le fait que l'arbre d'entraînement (40, 70) de l'interrupteur de mise à la terre est protégé par un tablier isolant (31, 32) du boîtier (18) d'interrupteur de coupure en charge, prolongé latéralement vers le bas, sous lequel passent les couteaux de contact de l'interrupteur de mise à la terre (39) lors de la mise à la terre, les couteaux de contact étant couplés par un bras de liaison (41) qui est fixé par serrage sur l'arbre d'entraînement (40) et est sensiblement perpendiculaire à la direction longitudinale desdits couteaux et, dans la position de coupure, les couteaux de contact étant disposés à proximité et le long de la paroi extérieure du tableau de couplage (12).

8. Tableau de couplage selon la revendication 7, caractérisé par le fait qu'un dispositif de mise à la terre (72, 73) à câble avec un couteau (72) de mise à la terre est associé à l'élément de borne de branchement (56) côté cosse d'extrémité de câble, lequel couteau, en position de coupure est également parallèle à la paroi extérieure (12) latérale du boîtier de tableau de couplage et est monté sur un arbre d'actionnement (73) qui est couplé à l'arbre d'entraînement (70) par l'intermédiaire d'un élément de couplage (76) est des biellettes (74, 75) articulées des deux côtés.

9. Tableau de couplage selon l'une des revendications 1 à 8, caractérisé par le fait que les éléments de borne bornes de branchement (33, 48, 56) sont moulés à partir d'un alliage d'aluminium.
